# EUROPÄISCHE PATENTSCHRIFT

(11) **EP 2 452 018 B1**
(45) Veröffentlichungstag und Bekanntmachung des Hinweises auf die Patenterteilung: **27.09.2017**
(21) Anmeldenummer: 10739505.5
(22) Anmeldetag: 07.07.2010
(51) Int. Cl.: E01C 9/00, E01C 11/22, E01C 3/00

(54) **AUFLAGEPLATTE MIT IN REIHEN UND SPALTEN VERSETZT ZUEINANDER ANGEORDNETEN, QUADRATISCHEN PLATTENTEILEN UND AUFNAHMEKAMMERN**
BASE PLATE COMPRISING SQUARE PLATE PARTS AND RECEIVING CHAMBERS ARRANGED IN ROWS AND COLUMNS AND OFFSET FROM EACH OTHER
PLAQUE D'APPUI PRÉSENTANT DES PARTIES DE PLAQUE ET DES CAVITÉS RÉCEPTRICES CARRÉES DISPOSÉES EN RANGS ET EN COLONNES DE MANIÈRE DÉCALÉE LES UNES PAR RAPPORT AUX AUTRES

(30) Priorität: 09.07.2009 DE 102009032701
(43) Veröffentlichungstag der Anmeldung: 16.05.2012
(73) Patentinhaber: Stäbler, Karl, 73553 Alfdorf-Hüttenbühl (DE)
(72) Erfinder: Stäbler, Karl, 73553 Alfdorf-Hüttenbühl (DE)
(74) Vertreter: Jeck, Anton
(86) Internationale Anmeldenummer: PCT/EP2010/004096
(87) Internationale Veröffentlichungsnummer: WO 2011/003587

(56) Entgegenhaltungen:
- DE-A1- 10 062 711
- DE-A1-102006 028 404
- US-A1- 2009 031 658

## Beschreibung

Die Erfindung betrifft eine Auflageplatte mit in Reihen und Spalten versetzt zueinander angeordneten quadratischen Plattenteilen und Aufnahmekammern. Dabei weisen die Aufnahmekammern zur Unterseite hin gleich hohe Seitenwände auf und sind im Bereich der Aufnahmekammern mit einem Boden abgeschlossen. Ein Teil der Seitenwände ist als Bodenanker ausgebildet. Die Außenseiten der Auflageplatte sind mit Mitteln zum Verbinden benachbarter gleich ausgebildeter Auflageplatten versehen.

Derartige Auflageplatten werden insbesondere als Boden- oder Trittplatten zum Verlegen auf dem Boden und zum Verankern in dem Boden verwendet. Diese Auflageplatten werden auf losem Erdreich, Sand, Sumpf, Matsch, Rasenflächen, Sportanlagen, Reitanlagen, begrünten Fuß- und Fahrzeugwegen, Parkflächen und dgl. eingesetzt.

Die Auflageplatten der eingangs erwähnten Art sind aus der DE 10 2006 028 404 A1 bekannt. Die bekannte Auflageplatten sind mit in Reihen und Spalten versetzt zueinander angeordneten Aufnahmekammern versehen. Die Aufnahmekammer weisen vier Seitenwände auf, auf wobei zwei dieser Seitenwände mit Durchbrüchen versehen sind, die eine durchgehende Öffnung bilden. Aus der DE 29 707 193 U1 ist eine als Rasengitterplatte gekennzeichnete Auflageplatte bekannt, die eine rechteckige Grundform aufweist und wabenförmige Kammern mit gleich hohen Seitenwänden trägt. Die Kammern weisen zugeordnete Drainageöffnungen auf. Die Auflageplatte ist zudem mit Bodenankern versehen, die die Verankerung im Boden verbessern. Die Verankerung einer derartigen Auflageplatte im Boden ist zwar ausreichend, doch die Drainageöffnungen können nicht für eine ausreichende Entwässerung sorgen, wenn es sich um ein wasserreiches Erdgebiet handelt.

Wie die WO 02/44474 A1 zeigt, ist auch eine Rasengitterplatte bekannt, bei der eine Platte mehrere zur Oberseite hin offene Drainageöffnungen aufweist, die unten in Krallen auslaufen. Diese Rasengitterplatte wird in den Erdboden eingerüttelt, und zwar so weit, bis die Unterseite der Platte mit der Erdoberfläche auf gleicher Höhe liegt. Beim Weiterrütteln wird dann das Erdmaterial in den Drainageöffnungen verdichtet und so ein ausgezeichneter Form- und Kraftschluss mit dem Erdreich erreicht. Von einer Entwässerung der Auflageplatte beim Verankern in einem wasserreichen Erdgebiet ist nichts ausgesagt. Es wird lediglich die Verankerung im Erdreich verbessert.

Durch die US 6779946 B1 ist eine dreiteilige, aber auch zu einer Einheit gießbare Auflageplatte bekannt, die aus einer perforierten Deckplatte, einer perforierten Bodenplatte und einem dazwischen liegenden, Kammern bildenden Abstandsglied besteht. Die Kammerwände sind mit ovalen Durchbrüchen versehen, um eine Flüssigkeitsverbindung zwischen den Kammern zu ermöglichen. Die Durchbrüche sind in allen vier Kammerwänden und je eine Aufnahmekammer ist in den Eckbereichen der Auflageplatte angeordnet. Die Durchbrüche dienen zur Wasserhaltung und - verteilung innerhalb der Auflageplatte. Eine Entwässerung in der horizontalen Ebene nach außen wird nicht angesprochen.

Ferner sind durch die DE 29707770 U1, GB 2459920 A und US 20090031658 A1 Auflageplatten bzw. Fliesen bekannt, bei denen als Mittel für die Verbindung benachbarter Auflageplatten abstehende Verbindungslaschen mit Rastelementen und Verbindungsaufnahmen mit Rastaufnahmen an den Außenseiten der Auflageplatte angeformt sind.

Es ist Aufgabe der Erfindung, eine Auflageplatte der eingangs erwähnten Art so weiterzuentwickeln, dass sie ausreichend große Pflanzräume bietet und das Verwachsen mit dem Boden verbessert und auch die Vorteile der bekannten Auflageplatten aufweist.

Die gestellte Aufgabe wird mit den Merkmalen des Anspruchs 1 gelöst.

Man erkennt, dass die Erfindung jedenfalls dann verwirklicht ist, wenn es sich um eine Auflageplatte mit in Reihen und Spalten versetzt zueinander angeordneten quadratischen Plattenteilen und Aufnahmekammern handelt. Dabei weisen die Aufnahmekammern zur Unterseite hin gleich hohe Seitenwände auf und sind im Bereich der Aufnahmekammern mit einem Boden abgeschlossen. Ein Teil der Seitenwände ist als Bodenanker ausgebildet, und die Außenseiten der Auflageplatte sind mit Mitteln zum Verbinden benachbarter gleich ausgebildeter Auflageplatten versehen. Alle vier Seitenwände der Aufnahmekammern sind mit Durchbrüchen versehen, die mit den Durchbrüchen einer Reihe und/oder einer Spalte durchgehende Entwässerungskanäle bilden. Wasser aus dem Erdreich kann dann aus dem verankerten Erdreich der Auflageplatte abfließen.

Dabei kann die Entwässerung in vier Richtungen erfolgen.

Die Entwässerung kann auch nur in einer bestimmten Richtung vorgenommen werden, wenn die Aufnahmeplatte mit leichter Neigung im losen Erdreich, Sand, Sumpf, Matsch, in Rasenflächen, Sportanlagen, Reitanlagen, begrünten Fuß- und Fahrzeugwegen, Parkflächen und dgl. verlegt wird.

Weitere vorteilhafte Ausgestaltungen sind den Unteransprüchen entnehmbar.

So kann die Auflageplatte derart gestaltet werden, dass die Reihen der Aufnahmekammern von den Spalten der Aufnahmekammern getrennt und um jeweils um eine Aufnahmekammer gegeneinander versetzt sind. Dabei können die Reihen und Spalten der Aufnahmekammern so verteilt sein, dass jeweils eine Aufnahmekammer die Eckbereiche der Auflageplatte bildet.

Als Mittel für die Verbindung benachbarter gleicher Auflageplatten können abstehende Verbindungslaschen mit Rastelementen und Verbindungsaufnahmen mit Rastaufnahmen an den Außenseiten der Auflageplatte abstehend angeformt sein, wobei die Verbindungslaschen an einem halben Plattenteil ½ x 10) vorstehen und die Verbindungsaufnahme mit Rastaufnahme in einem halben Plattenteil (½ x 10) eingelassen ist. Dabei verjüngen sich die Seitenflächen der Verbindungslaschen zum Ende hin, und die Seitenflächen der Verbindungsaufnahmen erweitern sich zum Ende hin. Die Form der Verbindungslaschen ist dabei an die Form der Verbindungsaufnahmen angepasst.

Die Seitenwände der halben Aufnahmekammern (½ x 11) sind an den Außenseiten der Auflageplatte nach unten verlängert und als Bodenanker ausgebildet, wobei das Ende der Seitenwände einen Haken bildet.

Die Seitenwände der halben Plattenteile (½ x 10) weisen die Höhe der Seitenwände der Aufnahmekammern auf und sind mit abstehenden, federnden Lappen versehen.

Die Vorteile der Erfindung gegenüber dem Stand der Technik sind Folgende:
1. Keine der bekannten Auflageplatten besitzt eine geschlossene Draufsichtsfläche; diese geschlossene Draufsichtsfläche ermöglicht eine hohe Tragfähigkeit der Auflageplatte und trotzdem eine Entwässerung bei optimaler Größe der Pflanzräume.
2. Durch die Anordnung der beiden Plattenebenen und deren Verbindung über deren Seitenwände zueinander entsteht ein sehr steifes und tragfähiges Produkt.
3. Beim Einrütteln wird die untere Seite der Auflageplatte belastet, bzw. der Erdboden wird verdichtet; der Erdboden unter der oberen Platte wird nicht verdichtet, kann somit entwässern und lässt den Graswuchs zu.
4. Die langen Ankerkrallen, die beim Stand der Technik nicht zu finden sind, halten die Auflageplatte fest im Boden; somit können die Platten auch in lockeren Böden verwendet werden, wie in Split, Sand oder aufgefrästem Boden; bei Verwendung der Auflageplatten auf beispielsweise einem Parkplatz verschieben sich die Auflageplatten nicht beim Lenken oder Bremsen eines Fahrzeugs.
5. Nach dem Auflegen und Einrütteln der Auflageplatten sind keine weiteren Arbeiten mehr erforderlich; die bekannten Auflageplatten benötigen meist eine gesonderte Untergrundbefestigung und müssen von oben befüllt werden.

Die Erfindung wird anhand eines in den Zeichnungen dargestellten Ausführungsbeispiels näher erläutert. Es zeigen:
- Fig. 1: eine perspektivische Ansicht einer Auflageplatte nach der Erfindung,
- Fig. 2: eine Draufsicht auf die Oberseite der Auflageplatte nach Fig. 1,
- Fig. 3: eine Seitenansicht der Auflageplatte in Richtung III der Fig. 2 und
- Fig. 4: eine Seitenansicht der Auflageplatte in Richtung IV der Fig. 2

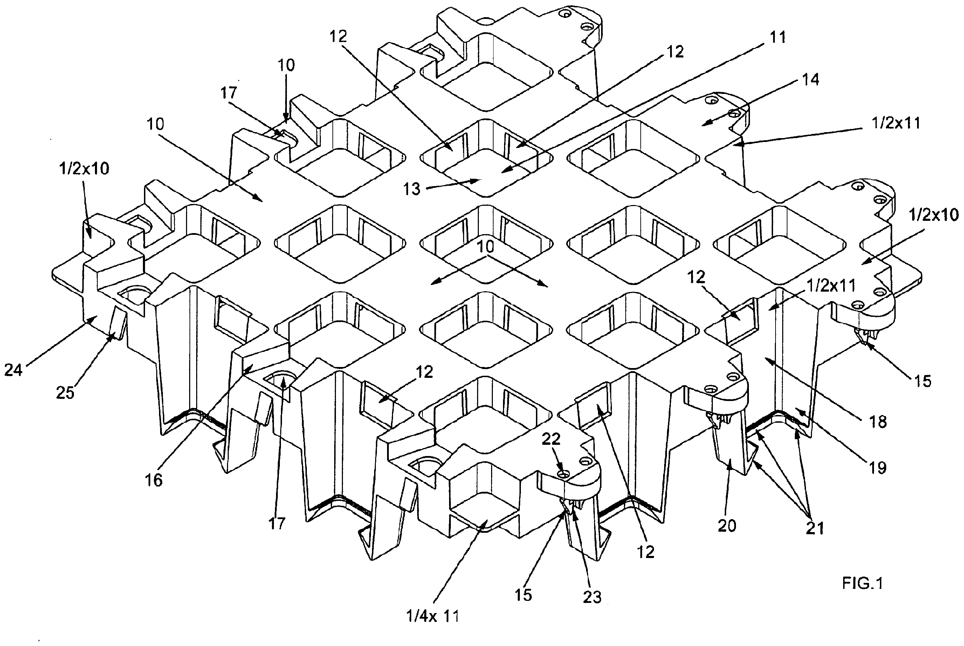

Wie die Ansicht nach Fig. 1 zeigt, weist die Auflageplatte drei Reihen mit je drei Aufnahmekammern 11 und zwei Spalten mit je zwei Aufnahmekammern 11 auf. Dabei sind die Aufnahmekammern 11 der Reihen um jeweils eine Aufnahmekammer 11 gegenüber den Aufnahmekammern 11 der Spalten versetzt. Die Auflageplatte weist dann vier Eckbereiche mit jeweils einer Aufnahmekammer 11 auf. Die Aufnahmekammern 11 weisen vier Seitenwände mit gleicher Höhe auf und sind mit einem Boden 13 abgeschlossen. Es ist deutlich erkennbar, dass im Ausführungsbeispiel alle vier Seitenwände einer Aufnahmekammer 11 mit Durchbrüchen 12 versehen sind. Diese Durchbrüche 12 bilden über die Reihen und Spalten der Aufnahmekammern 11 jeweils durchgehende Entwässerungskanäle, die für eine ausreichende Entwässerung des in den Aufnahmekammern 11 enthaltenen Erdreichs sorgen. Die Oberseite der Auflageplatte besteht aus einzelnen Plattenteilen 10, die quadratisch und miteinander verbunden sind.

Damit ist schon einmal die Aufgabe der Entwässerung gelöst. Zum Verbinden gleicher Auflageplatten sind sowohl die Reihen als auch die Spalten der Aufnahmekammern 11 mit Verbindungsmitteln versehen. Bei den Reihen steht auf der linken Außenseite die Auflageplatte um ein halbes Plattenteil ½ x 10 vor und weist eine Verbindungsaufnahme 16 mit Rastaufnahme 17 auf. Auf der rechten Außenseite der Reihen von Aufnahmekammern 11 steht ein angeformtes Teil um ein halbes Plattenteil ½ x 10 vor und trägt eine abstehende Verbindungslasche 14, die in eine Verbindungsaufnahme 16 einer benachbarten Auflageplatte einführbar ist. An der Unterseite der Verbindungslaschen 14 sind Rastelemente 15 angeformt, die in eine Rastaufnahme 17 in einer Verbindungsaufnahme 16 einrastbar sind. Die Rastelemente 15 sind als Rasthaken ausgebildet, die über Bohrungen 22 leichter herstellbar sind.

Bei den Spalten bilden halbe Aufnahmekammern ½ x 11 den Abschluss an der oberen und unteren Außenseite der Auflageplatte. Die Seitenwände 18, 19 und 20 dieser halben Aufnahmekammern ½ x 11 sind nach unten verlängert und bilden mit den Haken 21 einen Bodenanker. Dies trifft auch für die Reihen zu, die die den Spalten zugeordneten Aufnahmekammern 11 miteinander verbinden. Beidseitig gehen diese Reihen in halbe Aufnahmekammern ½ x 11 über und sind mit nach unten verlängerten Seitenwänden 18, 19 und 20 versehen, die wiederum mit Haken 21 versehen sind und einen Bodenanker bilden.

Im Bereich der Verbindungsaufnahmen 16 mit den Rastaufnahmen 17 tragen die halben Plattenteile ½ x 10 Seitenwände 24, die dieselbe Höhe haben wie die Seitenwände der Aufnahmekammern 11. An diesen Seitenwänden 24 sind federnde Lappen 25 angeformt, die für eine Verspannung der untereinander verbundenen Auflageplatten sorgen.

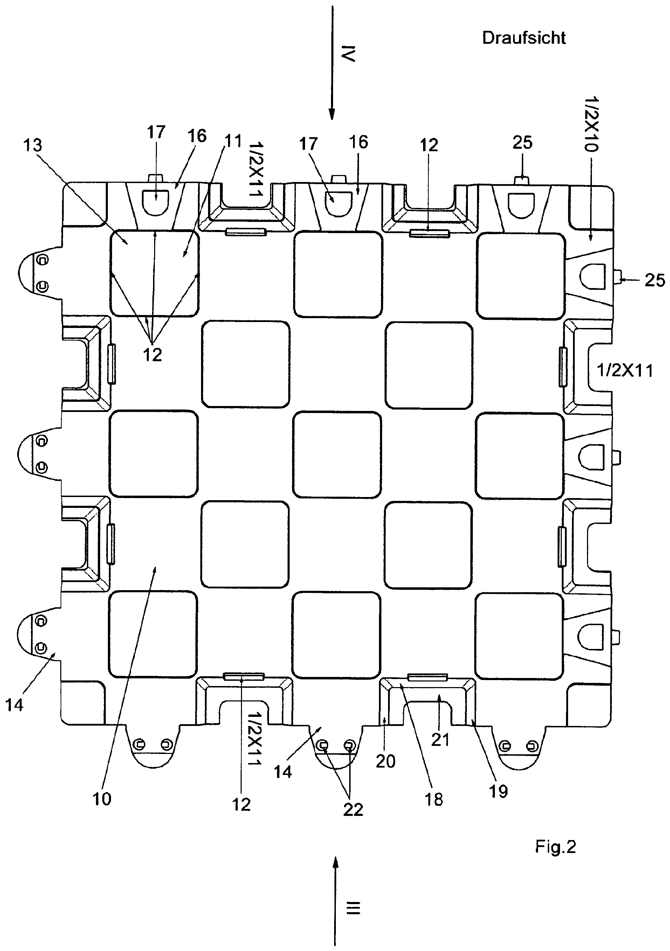

In der Fig. 2 ist die Form der Auflageplatte zu erkennen, die sich mehr einer quadratischen Form annähert, da an allen Außenseiten halbe Plattenteile ½ x 10 oder halbe Aufnahmekammern ½ x 11 anschließen. An der quadratischen Form stehen nur die Verbindungslaschen 14 ab, die in Verbindungsaufnahmen 16 eingeführt werden. An zwei Außenseiten stehen federnde Lappen 25 ab.

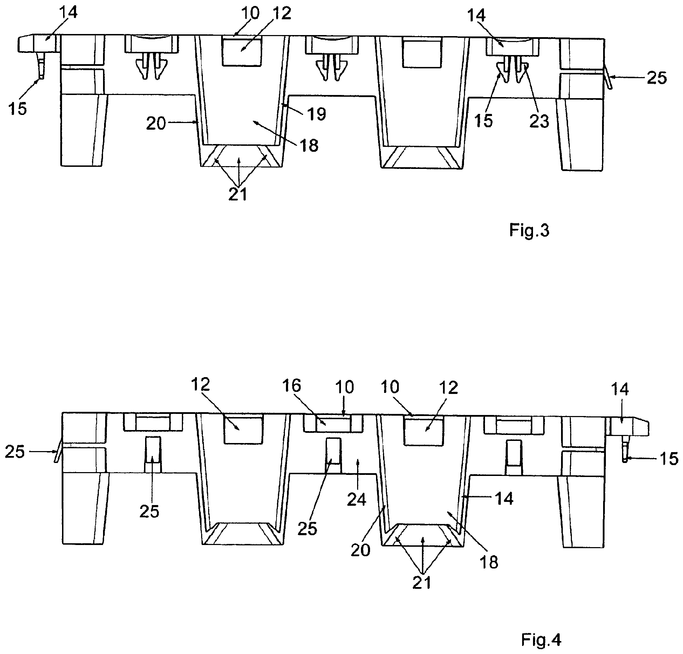

Die Seitenansicht nach Fig. 3 zeigt die Verbindungslaschen 14, wobei die beiden Linien zu beiden Seiten anzeigen, dass sich die Verbindungslaschen 14 zum Ende hin verjüngen. Die angeformten Rastelemente 15 sind als Rasthaken ausgebildet, wie die Haken 23 zeigen. Damit die Haken 23 leichter herstellbar sind, sind über den Haken 23 entsprechende Bohrungen 22 in der Verbindungslasche 14 vorgesehen. Am linken Ende der Ansicht steht die Verbindungslasche 14 an der Auflageplatte ab und zeigt die Rastelemente 15 in ihrer Stärke.

Die Seitenansicht nach Fig. 4 zeigt die Verbindungsaufnahme 16, die sich zum Ende hin erweitert und an die Form einer Verbindungslasche 14 angepasst ist. Da die Verbindungsaufnahme 16 zum Ende hin offen ist, wird auch ein Teil des anschließenden Plattenteils 10 eingesehen. Die federnden Lappen 25 stehen an der linken Außenseite ab und die Verbindungslaschen 14 mit den Rastelementen 15 an der rechten Außenseite der Auflageplatte.

Beide Fig. 3 und 4 lassen auch erkennen, dass die Seitenwände 18, 19 und 20 im Bereich der halben Aufnahmekammern ½ x 11 nach unten verlängert sind und eine größere Länge als die Seitenwände der übrigen Aufnahmekammern 11 aufweisen. Damit wird eine gute Verankerung als Auflageplatte im Erdreich erreicht.

## Patentansprüche

1. Auflageplatte (10) mit in Reihen und Spalten versetzt zueinander angeordneten Plattenteilen (10) und Aufnahmekammern (11), wobei
die Aufnahmekammern (11) mit einem Boden (13) abgeschlossen sind und vier Seitenwände aufweisen, die sich jeweils von benachbarten Plattenteilen (10) aus nach unten erstrecken,
wobei ein Teil der Seitenwände (18, 19, 20) sich über den Boden (13) hinaus nach unten erstreckt und als Bodenanker (21) ausgebildet ist,
die Außenseiten der Auflageplatte mit Mitteln (14, 15; 16, 17) zum Verbinden benachbarter gleich ausgebildeter Auflageplatten versehen sind, und
alle vier Seitenwände der Aufnahmekammern (11) oberhalb des Bodens (13) mit Durchbrüchen (12) versehen sind, die mit den Durchbrüchen (12) einer Reihe und/oder Spalte von Aufnahmekammern (11) eine durchgehende Öffnung, insbesondere Kanal, bilden.

2. Auflageplatte nach Anspruch,
**dadurch gekennzeichnet,**
**dass** sie mit leichter Neigung in losem Erdreich, Sand, Sumpf, Matsch, in Rasenflächen, Sportanlagen, Reitanlagen, begrünten Fuß- und Fahrzeugwegen, Parkflächen und dgl. verlegt ist.

3. Auflageplatte nach einem der Ansprüche 1 bis 2,
**dadurch gekennzeichnet,**
**dass** die Reihen der Aufnahmekammern (11) von den Spalten der Aufnahmekammern (11) getrennt und um jeweils eine Aufnahmekammer (11) gegeneinander versetzt sind.

4. Auflageplatte nach Anspruch 3,
**dadurch gekennzeichnet,**
**dass** die Reihen und Spalten der Aufnahmekammern (11) so verteilt sind, dass jeweils eine Aufnahmekammer (11) die Eckbereiche der Auflageplatte bildet.

5. Auflageplatte nach einem der Ansprüche 3 und 4,
**dadurch gekennzeichnet,**
**dass** als Mittel (14, 15; 16, 17) für die Verbindung benachbarter Auflageplatten abstehende Verbindungslaschen (14) mit Rastelementen (15) und Verbindungsaufnahmen (16) mit Rastaufnahme (17) an den Außenseiten der Auflageplatte angeformt sind, wobei die Verbindungslaschen (14) an einem halben Plattenteil (½ x 10) vorstehen und die Verbindungsaufnahme (16) mit Rastaufnahme (17) in ein halbes Plattenteil (½ x 10) eingelassen ist.

6. Auflageplatte nach einem der Ansprüche 3 bis 5,
**dadurch gekennzeichnet,**
**dass** die Seitenflächen der Verbindungslaschen (14) sich zum Ende hin verjüngen und
**dass** die Seitenflächen der Verbindungsaufnahmen (16) sich zum Ende hin erweitern, wobei die Form der Verbindungslaschen (14) an die Form der Verbindungsaufnahmen (16) angepasst ist.

7. Auflageplatte nach einem der Ansprüche 3 bis 6,
**dadurch gekennzeichnet,**
**dass** die Seitenwände (18, 19, 20) der halben Aufnahmekammern (½ x 11) an den Außenseiten der Auflageplatte nach unten verlängert und als Bodenanker ausgebildet sind, wobei das Ende der Seitenwände (18, 19, 20) einen Haken (21) bildet.

8. Auflageplatte nach einem der Ansprüche 3 bis 7,
**dadurch gekennzeichnet,**
**dass** die Seitenwände (24) der halben Plattenteile (½ x 10) die Höhe der Seitenwände der Aufnahmekammern (11) aufweisen und mit einem abstehenden federnden Lappen (22) versehen sind.

## Claims

1. A support plate (10), having plate parts (10) and receiving chambers (11) offset from one another in rows and columns, wherein
the receiving chambers (11) are closed off by a bottom (13) and have four side walls, which extend downward from adjacent plate parts (10),
wherein some of the side walls (18, 19, 20) extend downward past the bottom (13) and are embodied as bottom anchors (21),
the outsides of the support plate are provided with means (14, 15; 16, 17) for connecting adjacent, identically embodied support plates, and
all four side walls of the receiving chambers (11) are provided, above the bottom (13), with perforations (12), which with the perforations (12) of a row and/or column of receiving chambers (11) form one continuous opening, in particular a duct.

2. The support plate of claim 1,
**characterized in that**
it is laid with a slight inclination in loose soil, sand, sump, mud, lawn areas, sports fields, horseback riding facilities, footpaths and vehicle roads plated with vegetation, parking areas, and the like.

3. The support plate of one of claims 1 through 2,
**characterized in that**
the rows of receiving chambers (11) are separated from the columns of receiving chambers (11) and are offset from one another by one receiving chamber (11) each.

4. The support plate of claim 3,
**characterized in that**
the rows and columns of the receiving chambers (11) are distributed such that one receiving chamber (11) forms each of the corner regions of the support plate.

5. The support plate of one of claims 3 and 4,
**characterized in that**
as the means (14, 15; 16, 17) for connecting adjacent support plates, projecting connecting tabs (14) with detent elements (15) and connecting receptacles (16) with a detent receptacle (17) are formed onto the outsides of the support plate, and the connecting tabs (14) project by one plate part half (½ x 10), and the connecting receptacle (16) with the detent receptacle (17) is let into a plate part half (½ x 10).

6. The support plate of one of claims 3 through 5,
**characterized in that**
the side faces of the connecting tabs (14) taper toward the end, and
that the side faces of the connecting receptacles (16) broaden toward the end, the shape of the connecting tabs (14) being adapted to the shape of the connecting receptacles (16).

7. The support plate of one of claims 3 through 6,
**characterized in that**
the side walls (18, 19, 20) of the halves of receiving chambers (½ x 11) are lengthened downward at the outsides of the support plate and are embodied as bottom anchors, and the end of the side walls (18, 19, 20) forms a hook (21).

8. The support plate of one of claims 3 through 7,
**characterized in that**
the side walls (24) of the support plate halves (½ x 10) have the same height as the side walls of the receiving chambers (11) and are provided with a resilient part (22).

## Revendications

1. Plaque d'appui (10) avec des parties de plaque (10) et des cavités réceptrices (11) disposées en rangées et colonnes de manière décalées les unes par rapport aux autres, dans laquelle les cavités réceptrices (11) sont fermées par un fond (13) et présentent quatre parois latérales qui s'étendent respectivement vers le bas à partir de parties de plaque (10) voisines,
dans laquelle une partie des parois latérales (18, 19, 20) s'étend au-delà du fond (13) vers le bas et est réalisée en tant qu'ancrage au sol (21),
les côtés extérieurs de la plaque d'appui étant dotés de moyens (14, 15 ; 16, 17) pour relier des plaques d'appui voisines réalisées de façon similaire, et l'ensemble des quatre parois latérales des cavités réceptrices (11) sont dotées de passages (12) au-dessus du fond (13) lesquels forment, avec les passages (12) d'une rangée et/ou colonne de cavités réceptrices (11), une ouverture de bout en bout, en particulier un canal.

2. Plaque d'appui selon la revendication,
**caractérisée en ce qu'**elle est posée avec une légère inclinaison dans la terre meuble, du sable, des marécages, de la boue, dans des surfaces de gazon, des installations sportives, des centres équestres, des voies piétonnes et de circulation verdies, des places de parking et similaires.

3. Plaque d'appui selon l'une des revendications 1 à 2,
**caractérisée en ce que** les rangées des cavités réceptrices (11) sont séparées des colonnes des cavités réceptrices (11) et sont décalées les unes par rapport aux autres respectivement de l'ordre d'une cavité réceptrice (11).

4. Plaque d'appui selon la revendication 3,
**caractérisée en ce que** les rangées et colonnes des cavités réceptrices (11) sont réparties de manière à ce que respectivement une cavité réceptrice (11) forme les zones de coin de la plaque d'appui.

5. Plaque d'appui selon l'une des revendications 3 et 4,
**caractérisée en ce que**, en guise de moyens (14, 15 ; 16, 17) pour le raccordement de plaques d'appui voisines, des pattes de raccordement (14) en saillie avec des éléments d'arrêt (15) et des logements de raccordement (16) avec cran d'arrêt (17) sont formés sur les côtés extérieurs de la plaque d'appui, dans laquelle les pattes de raccordement (14) sont en saillie sur une moitié de partie de plaque (1/2 x 10) et le logement de raccordement (16) avec cran d'arrêt (17) est ménagé dans une moitié de partie de plaque (1/2 x 10).

6. Plaque d'appui selon l'une des revendications 3 à 5,
**caractérisée en ce que** les surfaces latérales des pattes de raccordement (14) s'amenuisent vers l'extrémité et que les surfaces latérales des logements de raccordement (16) s'élargissent vers l'extrémité, dans laquelle la forme des pattes de raccordement (14) est adaptée à la forme des logements de raccordement (16).

7. Plaque d'appui selon l'une des revendications 3 à 6,
**caractérisée en ce que** les parois latérales (18, 19, 20) des moitiés de cavités réceptrices (1/2 x 11) sont réalisées en prolongement vers le bas sur les côtés extérieurs de la plaque d'appui et en tant qu'ancrage au sol, dans laquelle l'extrémité des parois latérales (18, 19, 20) forme un crochet (21).

8. Plaque d'appui selon l'une des revendications 3 à 7,
**caractérisée en ce que** les parois latérales (24) des moitiés de parties de plaque (1/2 x 10) présentent la hauteur des parois latérales des cavités réceptrices (11) et sont dotées d'une oreille (22) élastique en saillie.
